# FASCICULE DE BREVET EUROPEEN

(11) **EP 3 027 394 B1**
(45) Date de publication et mention de la délivrance du brevet: **12.04.2017**
(21) Numéro de dépôt: 14790153.2
(22) Date de dépôt: 22.07.2014
(51) Int. Cl.: B29C 70/48, B29C 70/78, B29C 45/14, F01D 5/28, F01D 5/14, F04D 29/32, B29K 705/00, B29L 31/08

(54) **PROCÉDÉ DE FABRICATION D'UNE AUBE EN MATÉRIAU COMPOSITE À BORD D'ATTAQUE MÉTALLIQUE INTÉGRÉ POUR MOTEUR AÉRONAUTIQUE À TURBINE À GAZ**
VERFAHREN ZUR HERSTELLUNG EINER SCHAUFEL AUS VERBUNDMATERIAL MIT EINER INTEGRIERTEN METALLVORDERKANTE FÜR EIN GASTURBINEN-FLUGZEUGTRIEBWERK
METHOD FOR PRODUCING A BLADE FROM A COMPOSITE MATERIAL HAVING AN INTEGRATED METAL LEADING EDGE FOR A GAS-TURBINE AIRCRAFT ENGINE

(30) Priorité: 29.07.2013 FR 1357485
(43) Date de publication de la demande: 08.06.2016
(73) Titulaire: SAFRAN, 75015 Paris (FR)
(72) Inventeur: PAUTARD, Sébastien, F-91120 Palaiseau (FR)
(74) Mandataire: Desormiere, Pierre-Louis
(86) Numéro de dépôt international: PCT/FR2014/051893
(87) Numéro de publication internationale: WO 2015/015091

(56) Documents cités:
- EP-A1- 0 813 956
- EP-A1- 1 777 063
- EP-A2- 2 353 830
- WO-A1-2010/004216
- Prabhas Bhat, Justin Merotte, Pavel Simacek, Suresh G. Advani: "Process Analysis of compression resin transfer molding", , 12 janvier 2009 (2009-01-12), XP002722802, Extrait de l'Internet: URL:http://ac.els-cdn.com/S1359835X0900011 6/1-s2.0-S1359835X09000116-main.pdf?_tid=7 0146896-bbd6-11e3-acf7-00000aab0f6c&acdnat =1396601723_ac549c3448752fc6ab4d0b8535dea5 4b [extrait le 2014-04-04]

## Description

### Arrière-plan de l'invention

La présente invention se rapporte au domaine général de la fabrication d'aubes pour moteur aéronautique à turbine à gaz en matériau composite comprenant un bord d'attaque métallique.

La présence d'un clinquant métallique sur le bord d'attaque d'une aube de moteur aéronautique à turbine à gaz réalisée en matériau composite permet de protéger l'aubage composite de l'abrasion/érosion et lors de l'impact d'un corps étranger. Ceci est notamment le cas pour les aubes de soufflante d'une turbomachine aéronautique qui sont exposées à l'ingestion d'un oiseau, de grêle, de glace, etc.

Il existe de nombreux procédés pour réaliser une aube de moteur à turbine à gaz en matériau composite. On pourra citer par exemple le procédé manuel de stratifié/drapage, le procédé de moulage par injection d'une préforme fibreuse, le procédé de brodage, le procédé de thermo-compression, etc. Ces procédés sont principalement basés sur l'utilisation d'une résine thermodurcissable (TD) ou thermoplastique (TP).

Une fois l'aube en matériau composite obtenue, il est alors nécessaire d'assembler sur son bord d'attaque le clinquant métallique de protection. A cet effet, le clinquant métallique, qui est réalisé par des procédés mécaniques tels que l'estampage, le formage ou l'électroformage par exemple, est collé sur le bord d'attaque de l'aube en matériau composite. Cette opération peut être réalisée dans un moule assurant le collage du clinquant métallique ou dans une étuve pour obtenir une réticulation du cordon de colle appliqué le cas échéant sur le clinquant.

Les procédés de fabrication précités présentent de nombreux inconvénients. En particulier, l'assemblage du clinquant métallique sur le bord d'attaque de l'aube en matériau composite est une opération supplémentaire qui est longue et coûteuse. De plus, ces procédés présentent de nombreuses opérations de préparation qui augmentent d'autant la durée et le coût de fabrication de l'aube.

Le document EP 2 353 830 A2 divulgue un procédé de fabrication d'une aube en matériau composite à bord d'attaque métallique intégré conformément au préambule de la revendication 1.

### Objet et résumé de l'invention

La présente invention a donc pour but principal de proposer un procédé de fabrication d'une aube en matériau composite munie d'un bord d'attaque métallique qui ne présente pas les inconvénients précités.

Conformément à l'invention, ce but est atteint grâce à un procédé de fabrication d'une aube en matériau composite à bord d'attaque métallique intégré pour moteur aéronautique à turbine à gaz, selon la revendication 1.

Un tel procédé est remarquable en ce que l'assemblage du bord d'attaque métallique sur l'aube en matériau composite est réalisé pendant le processus de fabrication de l'aube proprement dit (par surmoulage). Il en résulte un gain de temps et de coût de fabrication.

Par ailleurs, pendant le surmoulage du clinquant métallique pour la réalisation du bord d'attaque de l'aube, l'effet de la pression d'injection de la résine et du contact du front matière de celle-ci permettent de finaliser le formage et l'accostage sur les surfaces intrados et extrados de l'aube. La tolérance de réalisation du bord d'attaque métallique avant le surmoulage peut ainsi être relativement large, ce qui limite les coûts de fabrication et réduit le taux de rebuts. De plus, le surmoulage du bord d'attaque permet de limiter le retrait lié à l'anisotropie de la résine sur toute la hauteur de l'aube et la déformation post-injection liée à la résine.

Selon un mode de réalisation de « moulage par injection », le procédé peut comprendre la fermeture complète du moule d'injection préalablement au démarrage de l'injection de la résine.

Selon un autre mode de réalisation de « moulage par injection/compression », le procédé peut comprendre la fermeture partielle du moule d'injection préalablement et pendant l'injection de la résine. Dans ce cas, le procédé comprend de préférence la compression du moule d'injection partiellement fermé pour obtenir sa fermeture complète au cours de l'étape d'injection de la résine.

De préférence, le procédé comprend le moulage simultané de l'aube et d'au moins une plateforme de celle-ci. Ainsi, l'aube obtenue sera monobloc avec sa ou ses plateforme(s), ce qui évite la réalisation d'une étanchéité entre chaque plateforme et l'aube. De la sorte, l'intégration d'une ou plusieurs plateformes d'aube directement lors du processus de fabrication de l'aube proprement dit permet un gain de temps et de coût de fabrication.

Conformément à l'invention, l'étape d'injection est réalisée dans la cavité du moule, cette dernière étant dépourvue de préforme fibreuse.

L'invention a également pour objet l'application du procédé tel que défini précédemment à la fabrication d'une aube de soufflante, d'une aube directrice de sortie, d'une aube directrice d'entrée, ou d'une aube à angle de calage variable, conformément à la revendication 6.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue synoptique du procédé de fabrication selon un mode de réalisation de l'invention ;
- les figures 2A et 2B sont des vues schématiques d'un moule d'injection, respectivement en coupe longitudinale et en coupe transversale, pouvant être utilisé pour la mise en oeuvre du procédé selon l'invention ; et
- les figures 3 et 4 sont des vues synoptiques du procédé de fabrication selon d'autres modes de réalisation de l'invention.

### Description détaillée de l'invention

L'invention s'applique à la réalisation d'aubes en matériau composite pour moteur aéronautique à turbine à gaz ayant un bord d'attaque métallique.

Des exemples non limitatifs de telles aubes sont notamment les aubes de soufflante, les aubes directrices de sortie (appelées OGV pour « Outlet Guide Vane »), les aubes directrices d'entrée (appelées IGV pour « Inlet Guide Vane »), les aubes à angle de calage variable (appelées VSV pour « Variable Stator Vane »), etc.

Ces aubes en matériau composite peuvent obtenues à partir d'un renfort fibreux densifié par une matrice. Dans ce cas, elles sont fabriquées à partir d'une préforme fibreuse pouvant être obtenue de différentes façons connues de l'homme du métier. Typiquement, ces préformes peuvent être obtenues directement par tissage tridimensionnel de fils (formés par exemple de fibres de carbone) ou par drapage de tissus fibreux bidimensionnels.

Conformément à l'invention, ces aubes en matériau composite peuvent être obtenues directement par injection dans un moule d'une résine thermoplastique (TP) renforcée par des charges courtes, longues, etc.

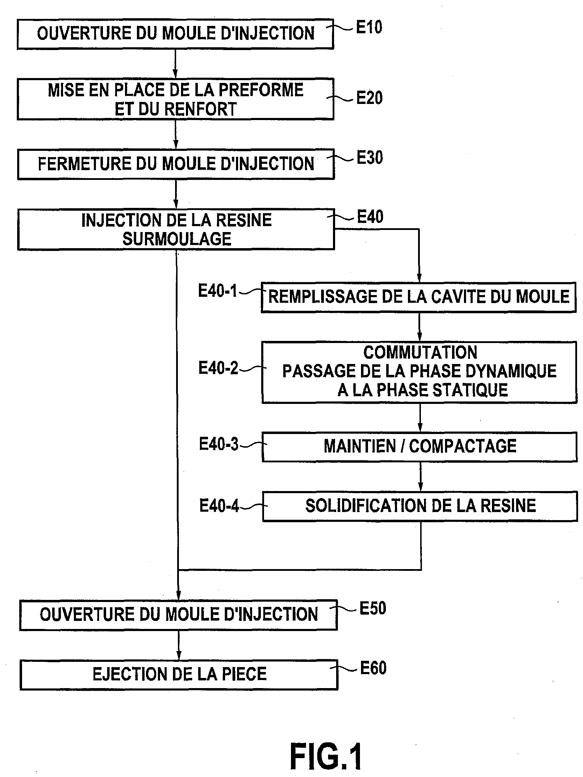

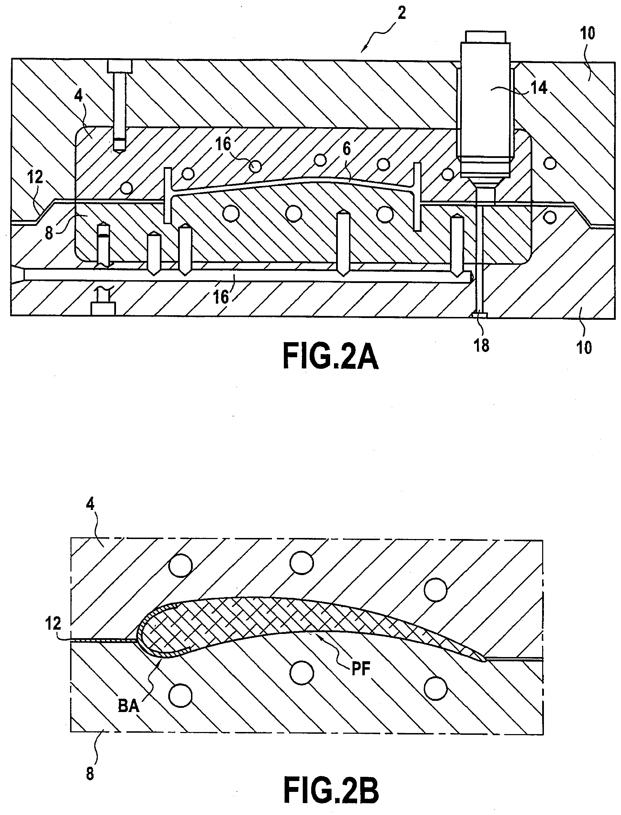

Le procédé de fabrication selon l'invention d'une aube en matériau composite munie d'un bord d'attaque métallique est décrit ci-après en liaison avec la figure 1 et les figures 2A et 2B qui illustrent un exemple de moule d'injection pouvant être utilisé pour la mise en oeuvre du procédé.

De façon connue, un tel moule d'injection 2 comprend une empreinte 4 munie d'une cavité 6 pour recevoir la préforme fibreuse d'aube, dans un mode de réalisation qui ne fait pas partie de la présente invention, ou directement la résine TP chargée, conformément à la présente invention, ainsi que le clinquant métallique destiné à réaliser le bord d'attaque de l'aube. Le moule d'injection comprend également un noyau 8 et deux plaques porte-empreinte 10. L'empreinte 4 et le noyau 8 sont séparés par un plan de joint 12. Une buse 14 permet de remplir la cavité 6 du moule par de la résine et des canaux de régulation 16 servent à réguler la température du moule. Enfin, des éjecteurs 18 permettent d'éjecter la pièce et le système d'alimentation du moule d'injection. Si besoin, notamment pour limiter les traces d'éjection au niveau des zones aérodynamiques de l'aubage, une main de préhension peut être utilisée pour éjecter la pièce du moule.

Au niveau de la cavité 6, le moule d'injection 2 comprend également un système de positionnement et de maintien d'un clinquant métallique BA destiné à venir réaliser le bord d'attaque de la préforme fibreuse PF de l'aube, dans un mode de réalisation qui ne fait pas partie de la présente invention, ou simplement de réaliser, conformément à la présente invention, le surmoulage du bord d'attaque par la résine TP chargée lors de la fermeture du moule.

La première étape du procédé selon l'invention consiste à ouvrir le moule d'injection (étape E10 - figure 1).

L'étape E20 suivante du procédé consiste à mettre en place dans le moule d'injection 2 ouvert le clinquant métallique BA pour la réalisation du bord d'attaque de l'aube, et le cas échéant la préforme fibreuse d'aube PF, dans un mode de réalisation qui ne fait pas partie de la présente invention. On notera que le clinquant métallique pourra présenter une forme de feuillard ou être plein.

Le moule d'injection peut alors être complètement fermé (étape E30) et la résine est injectée sous pression dans la cavité 6 du moule 2 de manière à former et à surmouler le clinquant métallique (étape E40). Dans le cas du recours à une préforme fibreuse PF pour la réalisation de l'aube, l'injection de résine permet également d'imprégner la préforme.

Dans le cas d'une préforme fibreuse PF réalisée à partir de fils de carbone, on pourra utiliser une résine thermoplastique, par exemple une résine réalisée à partir de polysulfure de phénylène et/ou de polyétherimide et/ou de polyéthercétone et/ou de polyaryléthercétones (PAEK). L'étape d'injection de la résine est alors réalisée dans la cavité 6 du moule dans laquelle une préforme fibreuse PF a préalablement été placée.

Conformément à la présente invention, la résine thermoplastique utilisée est chargée, par exemple par des fibres courtes ou longues, des flocons (« flakes »), billes, etc. de tous matériaux possibles (tels que verre, carbone, végétale, métallique, etc.). L'injection d'une telle résine thermoplastique chargée est alors réalisée dans la cavité 6 du moule qui est dépourvue de préforme fibreuse.

Plus précisément, de façon connue en soi, cette étape d'injection E40 se décompose en plusieurs phases successives, à savoir une phase dynamique de remplissage de la cavité 6 du moule par la résine (étape E40-1), une phase de commutation au cours de laquelle la cavité du moule est remplie (arrêt de la phase dynamique et passage à la phase statique - étape E40-2), une phase statique de maintien et de compactage au cours de laquelle la résine qui est compressible vient « gaver » la cavité du moule et une pression de compactage est appliquée pendant une durée déterminée (étape E40-3), puis une phase de solidification de la résine (étape E40-4).

L'étape E40-4 de solidification de la résine thermoplastique est obtenue par « refroidissement », c'est-à-dire par la température de régulation du moule d'injection pour atteindre la température d'éjection.

Après solidification de la résine, le moule d'injection est ouvert (étape E50) et l'aube obtenue peut être éjectée (étape E60) au moyen des éjecteurs 18 du moule d'injection et éventuellement de la main de préhension. L'aube qui est éjectée du moule d'injection présente alors un aubage en matériau composite et un clinquant métallique assemblé sur son bord d'attaque.

De préférence, il peut être prévu de réaliser un moulage simultané de l'aube et d'au moins une plateforme de celle-ci.

Dans le cas du recours à une préforme fibreuse pour la réalisation de l'aube, cette opération pourra être obtenue directement en positionnant la préforme d'aube et une préforme additionnelle de plateforme d'aube dans le moule d'injection avant sa fermeture, dans un mode de réalisation qui ne fait pas partie de la présente invention. Alternativement, en cas d'impossibilité à éjecter l'aube obtenue en une seule fois, cette opération pourra être réalisée par surmoulage de la plateforme sur l'aube. Selon encore une autre alternative, cette opération pourra être réalisée à l'aide d'un moule de bi ou tri-injection dans lequel un ensemble de noyaux mobiles réalisent les différentes formes de l'aube (aubage et plateformes).

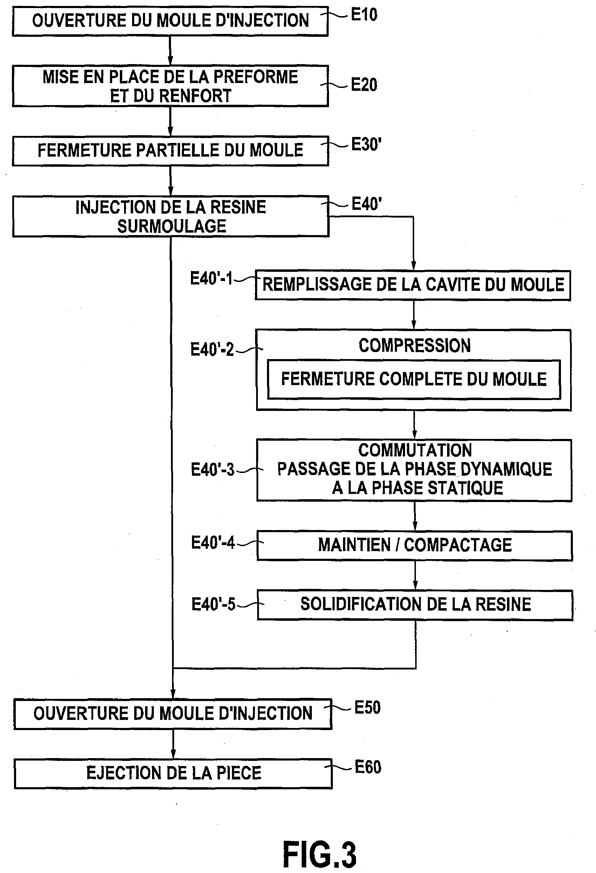

La figure 3 représente un autre mode de réalisation du procédé selon l'invention (procédé d'injection/compression).

Les premières étapes E10, E20 d'ouverture du moule d'injection et de mise en place dans celui-ci du clinquant métallique pour la réalisation du bord d'attaque de l'aube (et de la préforme fibreuse le cas échéant) sont identiques à celles du procédé précédemment décrit. Par ailleurs, le moule d'injection utilisé peut être le même que celui décrit en liaison avec les figures 2A et 2B.

L'étape E30' suivante consiste à fermer partiellement le moule d'injection. En pratique, cela est obtenu en laissant entrouvert le plan de joint 12 du moule d'injection.

La résine thermoplastique est alors injectée sous pression dans la cavité 6 du moule (étape E40'). Cette étape permet notamment de former et de surmouler le clinquant métallique. Plus précisément, la cavité du moule d'injection est quasiment voire complètement remplie par la résine (étape E40'-1) et une compression est appliquée sur le moule pour obtenir sa fermeture complète (étape E40'-2). On notera que la compression peut être appliquée après ou pendant le remplissage de la cavité du moule, voire pendant la phase de commutation décrite ci-dessous.

La phase de commutation (étape E40'-3) et la phase statique de maintien et de compactage (étape E40'-4) interviennent par la suite, avant la phase de solidification de la résine (étape E40'-5) comme décrit en liaison avec le procédé d'injection de la figure 1. Après solidification de la résine, le moule d'injection est ouvert (étape E50) et l'aube obtenue peut être démoulée (étape E60).

On notera que les étapes de compression (E40'-2) et de commutation (E40'-3) peuvent être inversées ou réalisées quasi-simultanément en fonction de la topologie de la pièce à fabriquer, de la résine utilisée et du système d'alimentation en résine.

On notera également que l'étape de compression E40'-2 permet de finaliser le formage du clinquant métallique de bord d'attaque dans la cavité du moule d'injection et l'accostage de celui-ci sur les surfaces aérodynamiques de l'aube. Elle permet également d'obtenir des formes gauches pour l'aube à fabriquer.

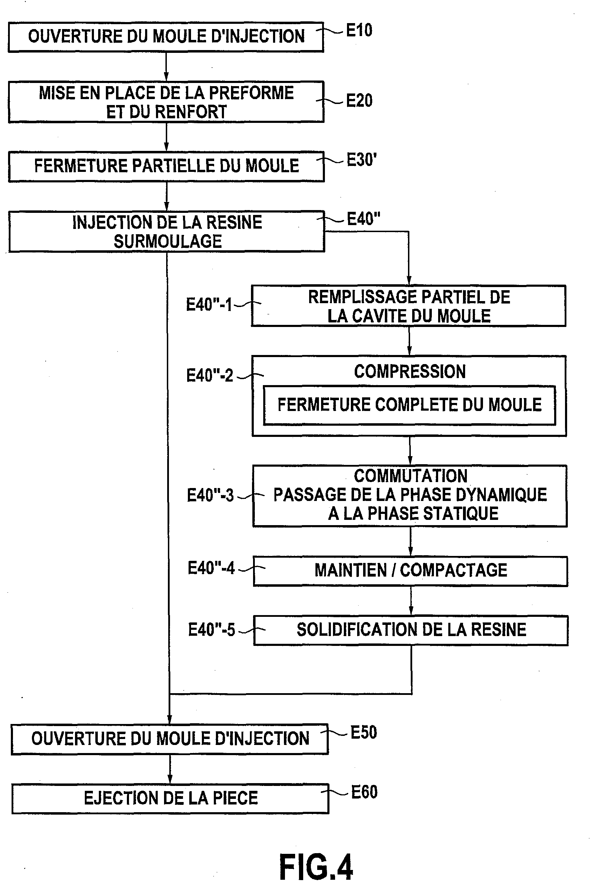

La figure 4 représente une variante de réalisation du procédé d'injection/compression selon l'invention.

Les étapes d'ouverture du moule d'injection (E10), de mise en place dans celui-ci du clinquant métallique et de la préforme fibreuse le cas échéant (E20) et de fermeture partielle du moule (E30') sont similaires à celles décrites précédemment.

Lors de l'étape suivante d'injection de la résine thermoplastique (E40"), la cavité du moule d'injection n'est que partiellement remplie (de l'ordre de 85% à 98% - étape E40"-1) avant la phase de compression permettant d'obtenir la fermeture complète du moule d'injection (étape E40"-2). De plus, la cavité du moule d'injection est finie d'être remplie par la résine soit au cours de la phase de compression (E40"-2), soit simultanément aux phases d'injection E40" et E40"-1 et de compression E40"-2.

Ensuite, se déroulent successivement la phase de commutation (étape E40"-3), la phase statique de maintien et de compactage (étape E40"-4) et la phase de solidification de la résine (étape E40"-5). Après solidification de la résine, le moule d'injection est ouvert (étape E50) et l'aube obtenue peut être démoulée (étape E60).

## Revendications

1. Procédé de fabrication d'une aube en matériau composite à bord d'attaque métallique intégré pour moteur aéronautique à turbine à gaz, **caractérisé en ce que** le procédé comprend successivement :
le placement (E20) dans une cavité (6) d'un moule d'injection (2) pour la réalisation d'une aube d'un clinquant métallique (BA) pour la réalisation du bord d'attaque de l'aube ;
la fermeture (E30 ; E30') du moule d'injection ;
l'injection sous pression (E40 ; E40' ; E40") d'une résine thermoplastique chargée dans la cavité (6) du moule de manière à former et à surmouler le clinquant métallique ;
le compactage (E40-3) de l'ensemble ;
la solidification (E40-4) de la résine par une température de régulation du moule d'injection ; et
le demoulage de l'aube obtenue,
procédé dans lequel l'étape d'injection est réalisée dans la cavité du moule, cette dernière étant dépourvue de préforme fibreuse.

2. Procédé selon la revendication 1, comprenant la fermeture complète (E30) du moule d'injection préalablement au démarrage de l'injection (E40) de la résine.

3. Procédé selon la revendication 1, comprenant la fermeture partielle (E30') du moule d'injection préalablement et pendant l'injection (E40') de la résine.

4. Procédé selon la revendication 3, comprenant en outre la compression (E40'-2 ; E40"-2) du moule d'injection partiellement fermé pour obtenir sa fermeture complète au cours de l'étape d'injection de la résine.

5. Procédé selon l'une quelconque des revendications 1 à 4, dans lequel le procédé comprend le moulage simultané de l'aube et d'au moins une plateforme de celle-ci.

6. Application du procédé selon l'une quelconque des revendications 1 à 5 à la fabrication d'une aube de soufflante, d'une aube directrice de sortie, d'une aube directrice d'entrée, ou d'une aube à angle de calage v.

## Patentansprüche

1. Verfahren zur Herstellung einer Schaufel aus Verbundwerkstoff mit integrierter metallischer Eintrittskante für ein Gasturbinenflugzeugtriebwerk, **dadurch gekennzeichnet, dass** das Verfahren nacheinander umfasst:
das Anordnen (E20) eines metallischen Zwischenstücks (BA) für die Herstellung der Eintrittskante der Schaufel, in einem Hohlraum (6) einer Spritzgussform (2) für die Herstellung einer Schaufel,
das Schließen (E30; E30') der Spritzgussform,
das Einspritzen unter Druck (E40; E40'; E40") eines beladenen thermoplastischen Harzes in den Hohlraum (6) der Form, um das metallische Zwischenstück zu formen und anzuformen,
das Verdichten (E40-3) des Ganzen,
das Verfestigen (E40-4) des Harzes durch eine Regelungstemperatur der Spritzgussform und
das Ausformen der erhaltenen Schaufel,
Verfahren, bei dem der Schritt des Einspritzens in dem Hohlraum der Form vollzogen wird, wobei letzterer keinen Faservorformling aufweist.

2. Verfahren nach Anspruch 1, umfassend das vollständige Schließen (E30) der Spritzgussform vor dem Starten des Einspritzens (E40) des Harzes.

3. Verfahren nach Anspruch 1, umfassend das teilweise Schließen (E30') der Spritzgussform vor und während des Einspritzens (E40') des Harzes.

4. Verfahren nach Anspruch 3, ferner umfassend das Zusammendrücken (E40'-2; E40"-2) der teilweise geschlossenen Spritzgussform, um ihr vollständiges Schließen im Laufe des Schrittes des Einspritzens des Harzes zu erreichen.

5. Verfahren nach einem der Ansprüche 1 bis 4, wobei das Verfahren das gleichzeitige Formen der Schaufel und wenigstens einer Plattform dieser umfasst.

6. Anwendung des Verfahrens nach einem der Ansprüche 1 bis 5 auf die Herstellung einer Gebläseschaufel, einer Austrittsleitschaufel, einer Eintrittsleitschaufel oder einer Schaufel mit variablem Anstellwinkel.

## Claims

1. A method of fabricating a blade of composite material having an incorporated metal leading edge for a gas turbine aeroengine, **characterized in that** the method comprises in succession:
• placing (E20) a metal strip (BA) for making the leading edge of a blade in a cavity (6) of an injection mold (2) for making the blade;
• closing (E30; E30') the injection mold;
• injecting (E40; E40'; E40") a filled thermoplastic resin under pressure into the cavity (6) of the mold so as to shape and overmold the metal strip;
• compacting (E40-3) the assembly;
• solidifying (E40-4) the resin by regulating the temperature of the injection mold; and
• unmolding (E60) the resulting blade,
wherein the injection step is carried out in the cavity of the mold, said cavity being deprived of any fiber preform.

2. A method according to claim 1, including completely closing (E30) the injection mold prior to starting injection (E40) of the resin.

3. A method according to claim 1, including partially closing (E30') the injection mold prior to and during injection (E40') of the resin.

4. A method according to claim 3, further including compressing (E40'-2, E40"-2) the partially closed injection mold in order to close it completely during the step of injecting the resin.

5. A method according to any one of claims 1 to 4, wherein the method includes molding the blade simultaneously with molding at least one platform of the blade.

6. The use of the method according to any one of claims 1 to 5 for fabricating a fan blade, an outlet guide vane, an inlet guide vane, or a variable stator vane.
